# EUROPEAN PATENT APPLICATION

(11) **EP 3 462 294 A1**
(43) Date of publication of application: **03.04.2019**
(21) Application number: 17193413.6
(22) Date of filing: 27.09.2017
(51) Int. Cl.: G06F 3/0486, G06F 3/01, G06T 19/00

(54) **A METHOD AND A SYSTEM FOR PERFORMING DATA OPERATIONS ON DATA OBJECTS**

(71) Applicant: Siemens Aktiengesellschaft, 80333 München (DE)
(72) Inventor: Wilde, Robert, 81379 München (DE)

(57) **Abstract**

A method for performing a data processing operation (DPO) on at least one data object (DO) stored in a memory of a physical network (ND) device of a network in response to one or more associated spatial gestures (SG) of a user (U) applied directly to a three-dimensional virtual representation item (VRI) of the respective data object representing said data object (DO) and displayed in a three-dimensional coordinate system (CSYS-ND) of said physical network device (ND) around said physical network device on a display of an augmented reality network device (AR-ND) of the user (U) or displayed as a hologram (H) around said physical network device (ND).

## Description

The invention relates to a method and system for performing a data processing operation on at least one data object stored in a memory of a physical network device, in particular a physical network device of an internet of things network.

In networks physical network devices the network nodes can be connected via wired or wireless links. These physical network devices can for instance comprise internet of things network devices connected to each other in a wired or wireless network.

For performing processing operations in such a network the concept of augmented reality AR can be applied. Augmented reality AR in general is related to the integration of digital information with the user's environment in real time. Unlike virtual reality VR which creates a totally artificial environment augmented reality AR uses the existing environment and overlays additional information on top of it. Augmented reality AR provides a direct or indirect view where physical, real world elements are augmented by computed or extracted real world sensory input data. In augmented reality AR information data about the environment and its objects can be overlaid on the visible surrounding real world.

It is an object of the present invention to provide a method which allows to facilitate data processing operations in an augmented reality network, in particular in an augmented internet of things network.

This object is achieved according to the first aspect of the present invention by a method comprising the features of claim 1.

The method according to the first aspect of the present invention provides a method for performing a data processing operation on at least one data object stored in a memory of a physical network device of a network in response to one or more associated spatial gestures of a user applied directly to a three-dimensional virtual representation item of the respective data object representing said data object and displayed in a three-dimensional coordinate system of said physical network device around said physical network device on a display of an augmented reality network device of the user or displayed as a hologram around said physical network device.

In a possible embodiment of the method according to the first aspect of the present invention the data processing operation comprises a duplicating or not duplicating data transfer operation of the data object from a physical source network device to a physical target network device of a network.

In a still further possible embodiment of the method according to the first aspect of the present invention for performing a data transfer operation to transfer the data object from a memory of a physical source network device to a memory of a physical target network device, the three-dimensional virtual representation item of the data object stored in the memory of the physical source network device being displayed in the three-dimensional coordinate system around said physical source network device is selected in response to a first spatial gesture of the user, triggering a transformation of the three-dimensional coordinates of the selected three-dimensional virtual representation item of the data object to be transferred into three-dimensional user related coordinates of a user coordinate system of the user, wherein the selected three-dimensional representation item of the data object is then moved within the user coordinate system towards the physical target network device in response to a second spatial gesture of the user applied directly to the three-dimensional representation item of the data object to be transferred or in response to a physical movement of the user himself towards the physical target network device.

In a still further possible embodiment of the method according to the first aspect of the present invention a relative position between the moved virtual representation item of the data object to be transferred and the physical target network device is continuously calculated and evaluated to determine whether the relative position between the moving virtual representation item of the data object to be transferred and the physical target network device does fulfil a predefined data transfer condition to initiate a physical data transfer operation.

In a still further possible embodiment of the method according to the first aspect of the present invention if the data transfer condition is fulfilled a physical data transfer of the data object from the physical source network device to the physical target network device via a wireless link or a wired link of the network is automatically initiated and the transferred data object is stored in the memory of the physical target network device of the network.

In a still further possible embodiment of the method according to the first aspect of the present invention the data transfer condition is fulfilled if the current position of the moved virtual representation item of the data object to be transferred is within a three-dimensional boundary volume around said physical target network device.

In a still further possible embodiment of the method according to the first aspect of the present invention the data object comprises a data file including a program file, a text file, an image file and/or an audio file.

In a still further possible embodiment of the method according to the first aspect of the present invention the data processing operation comprises a data file transfer operation, a data file deletion operation, a data file opening operation, a data file transformation or conversion operation, a data file distribution operation, and/or a data file update operation.

In a still further possible embodiment of the method according to the first aspect of the present invention the virtual representation item of the data object stored in the memory of the physical network device is anchored to the respective physical network device in the three-dimensional coordinate system of the respective physical network device.

In a still further possible embodiment of the method according to the first aspect of the present invention the physical network device comprises a unique spatial network address used for performing the data processing operation on the data object stored in the memory of the respective physical network device in response to the spatial gesture applied by the user to the three-dimensional virtual representation item of the data object.

In a still further possible embodiment of the method according to the first aspect of the present invention the spatial gesture applied directly to the virtual representation item provides a direction, a velocity and/or an acceleration of the virtual representation item moved in the three-dimensional coordinate system from the physical source network device towards one or more physical target network devices and/or moved towards other virtual representation items of other data objects.

In a still further possible embodiment of the method according to the first aspect of the present invention the other virtual representation items represent data objects stored in a memory of the physical source network device or in memories of other physical target network devices of the network.

In a still further possible embodiment of the method according to the first aspect of the present invention the data processing operation comprises an arithmetic and/or logic processing operation performed automatically on the basis of data within one or more data objects represented by associated virtual representation items and selected in response to spatial gestures applied directly by a user to the respective virtual representation items.

In a still further possible embodiment of the method according to the first aspect of the present invention the physical network device comprises in the three-dimensional coordinate system, where virtual representation items of data objects can be moved by a user, a surrounding virtual gravitational field which applies a virtual attraction force or virtual repulsion force on the virtual representation items in the vicinity of the respective physical network device.

In a still further possible embodiment of the method according to the first aspect of the present invention the virtual attraction force and/or the virtual repulsion force depends on a calculated distance between the current position of the virtual representation item and the location of the physical network device in the three-dimensional coordinate system.

In a still further possible embodiment of the method according to the first aspect of the present invention the physical network device comprises an internet of things network device of a wired or wireless network.

The invention further provides according the second aspect a network comprising the features of claim 17.

The invention provides according to the second aspect a network comprising a plurality of physical network devices, wherein a data processing operation on at least one data object stored in a memory of a physical network device is performed in response to one or more detected spatial gestures applied directly by a user to a virtual representation item representing the data object, wherein the virtual representation item is displayed in a three-dimensional coordinate system around said physical network device on a display of an augmented reality network device worn by the user or is displayed as a hologram around said physical network device.

In the following possible embodiments the different aspects of the present invention are described in more detail with reference to the enclosed figures.
Fig. 1 shows a schematic diagram for illustrating an operation of a method according to the first aspect of the present invention;
Fig. 2 shows a further schematic diagram for illustrating a specific operation using a method according to the first aspect of the present invention;
Fig. 3 shows a further schematic diagram for illustrating a further exemplary operation using a method according to the first aspect of the present invention;
Fig. 4 shows a further schematic diagram for illustrating a further exemplary specific operation using a method according to the first aspect of the present invention;
Fig. 5 shows a further schematic diagram for illustrating a further specific operation using a method according to the first aspect of the present invention;
Fig. 6 shows a further schematic diagram for illustrating a specific exemplary operation using a method according to the first aspect of the present invention;
Fig. 7 shows a further schematic diagram for illustrating a further exemplary specific operation using a method according to the first aspect of the present invention;
Fig. 8 shows a further schematic diagram for illustrating a specific operation using a method according to the first aspect of the present invention;
Fig. 9 shows a block diagram of a possible exemplary embodiment of a network according to the second aspect of the present invention;
Fig. 10 shows a possible use case of the method according to the first aspect of the present invention; and
Fig. 11 shows schematically a further use case for using a method according to the first aspect of the present invention.

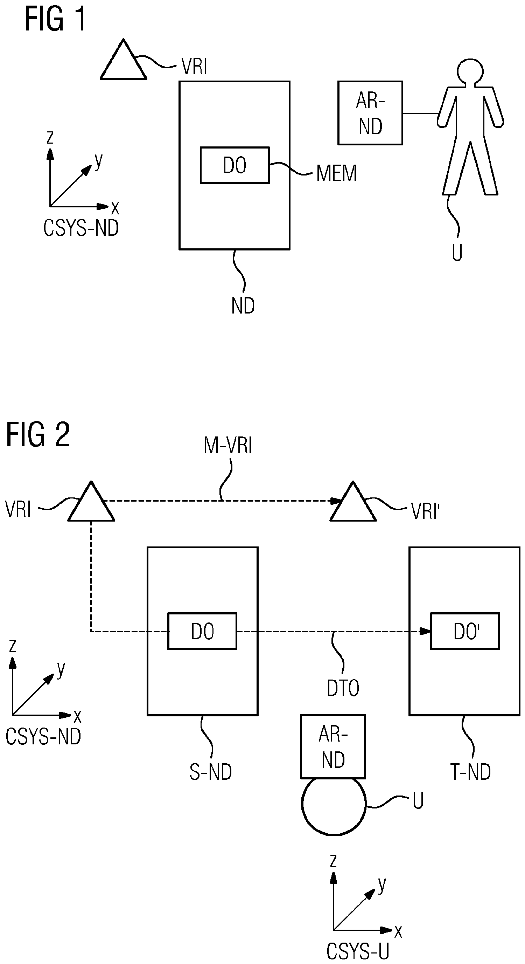

As can be seen in the schematic diagram of Fig. 1 at least one data object DO can be stored in a memory of a network device of a network. The network can be a wired or a wireless network connecting a plurality of network devices with each other. The network device ND can comprise a fixed network node such as a PC but also movable network nodes such as moving maintenance robots in a factory. The number of data objects DO stored in a memory of a network device can vary. The data objects DO can comprise data files including for instance program files, text files, image files and/or audio files. The data objects can comprise also more complex data objects comprising a plurality of interlinked data files. The data objects can comprise data specific to the associated network device ND.

In a still further embodiment the data objects DO can also be stored in a remote data base in association with the corresponding network device ND. In the illustrated embodiment of Fig. 1 data objects are stored in a local memory of the network device ND. As can be seen in Fig. 1 when a user U wears an augmented reality AR network device AR-ND. The augmented reality network device AR-ND is linked to the network of the network device ND. To perform a data processing operation DPO on the at least one data object DO stored in the memory of the physical network device ND the user U can apply directly an associated spatial gesture to a three-dimensional virtual representation item VRI of the respective data object DO representing the data object. A virtual representation item VRI can be formed by any kind of icon representing the data object. The icon or virtual representation item VRI can vary in form, colour or other attributes. Accordingly, a huge variety of different virtual representation items VRI may be provided and associated with different kinds of data objects DO. The virtual representation item VRI representing the data object is displayed in a three-dimensional coordinate system CSYS-ND of the physical network device ND as illustrated in the schematic diagram of Fig. 1. The virtual representation item VRI representing the data objects DO stored in the memory of the network device is displayed in the vicinity of the physical network device, i.e. around the physical network device on a display of the augmented reality network device AR-ND of the user.

In an alternative embodiment the virtual representation item VRI is displayed as a hologram around the physical network device. A hologram can be generated in a possible implementation by light beams, in particular laser beams generated by lasers of a holographic system. In this alternative embodiment the user U is not required to wear an augmented reality network device AR-ND as shown in the schematic diagram of Fig. 1. In this embodiment the virtual representation item VRI formed by a hologram is directly visible to the user.

In the embodiment as shown in the schematic diagram of Fig. 1 the user U can wear an augmented reality network device AR-ND to see the virtual representation in his field of view. The user U can make a spatial gesture which is applied directly to the displayed three-dimensional virtual representation item VRI of the data object to initiate the desired data processing operation DPO. Data processing operation can for instance comprise a data file transfer operation for transferring the data object DO from the memory of the network device to another location. The data processing operation DPO may also comprise a data file deletion operation to cancel or delete the data object DO represented by the virtual representation item VRI. The data processing operation DPO can also comprise a data file opening operation or a data file transformation or conversion operation. Examples for the data processing operation DPO comprise a data file distribution operation and/or a data file update operation. Different spatial gestures can be associated with different kinds of data processing operations DPOs. The spatial gesture applied by the user U to the virtual representation item VRI can comprise in a possible embodiment manual gestures performed by the user in the three-dimensional coordinate system.

Fig. 2 shows a schematic diagram for illustrating the performance of a data processing operation DPO using the method according to the first aspect of the present invention. In the illustrated example the data processing operation DPO comprises a duplicating or not duplicating data transfer operation DTO of the data object DO from a physical source network device S-ND to a physical target network device T-ND of a network. As illustrated in Fig. 2 each network device can comprise an associated coordinate system in space. Further, the user U can comprise an associated user coordinate system CSYS-U as shown in Fig. 2. In the illustrated embodiment of Fig. 2 the user wears an augmented reality network device AR-ND. In the field of view FoV of the user U there can be the physical source network device and the physical target network device. In this illustrated embodiment of Fig. 2 both network devices comprise a local memory for storing at least one data object. For performing a data transfer operation DTO to transfer the data object DO from the memory of the physical source network device S-ND to the memory of the physical target network device T-ND the three-dimensional virtual representation item VRI of the data object stored in the memory of the physical source network device S-ND being displayed in the three-dimensional coordinate system of the physical source network device can be selected automatically in response to a first predetermined spatial gesture of the user U. This selection of the virtual representation item VRI triggers the transformation of the three-dimensional coordinates of the selected three-dimensional virtual representation item VRI of the data object DO to be transferred into the three-dimensional user related coordinates of a user coordinate system CSYS-U of the user. The selected three-dimensional virtual representation item VRI of the data object DO is then moved within the user coordinate system CSYS-U towards the physical target network device T-ND in response to a second spatial gesture of the user U applied directly to the three-dimensional virtual representation item VRI of the data object DO to be transferred as illustrated in the schematic diagram of Fig. 2. As can be seen in Fig. 2 the virtual representation item VRI is moved by a spatial gesture of the user towards or in direction to the target network device T-ND as virtual representation item VRI'. The spatial gesture G applied by the user U can comprise a manual gesture such as dragging or pushing the virtual representation item VRI towards the target network device T-ND in the three-dimensional coordinate system or space. In a possible implementation this spatial gesture applied directly to the three-dimensional virtual representation item VRI can provide a direction, a velocity and/or an acceleration of the virtual representation item VRI moved in the three-dimensional coordinate system from the physical source network device S-ND towards one or more physical target network device T-ND). For instance, the user can push or drag the virtual representation item VRI in the direction of a specific target network device T-ND displayed on the augmented realty network device AR-ND. The user may in a specific special gesture apply a velocity and/or an acceleration to the virtual representation item VRI. For instance, the user may push or drag the virtual representation item VRI with a high velocity or acceleration towards the target network device T-ND to increase the speed of the data transfer operation DTO. On the contrary if the user pushes or drags the virtual representation item VRI of the data objects with a lower velocity or acceleration the data transfer operation DTO may be performed with less speed.

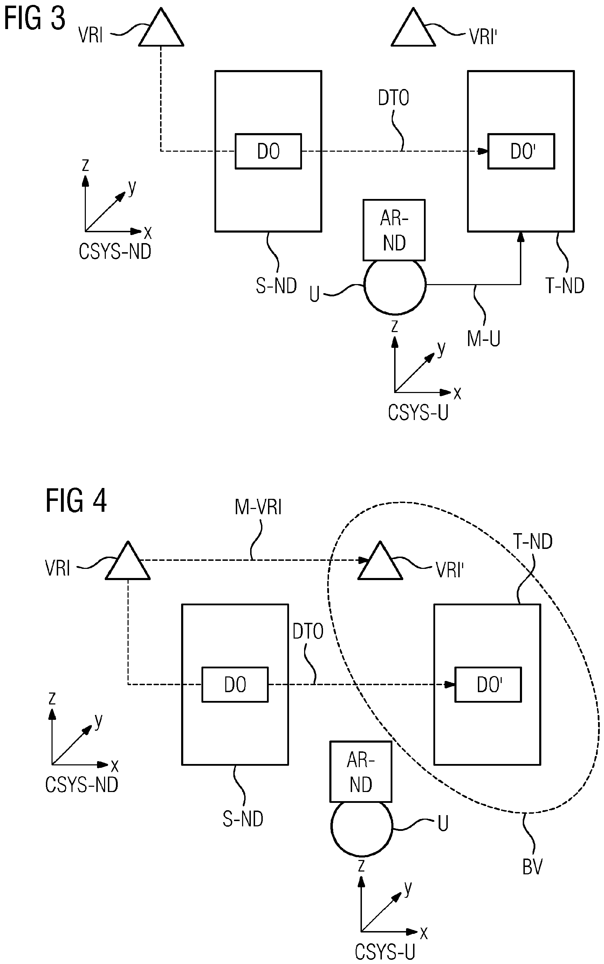

In the embodiment shown in the schematic diagram of Fig. 2 the data transfer operation DTO is performed by applying an associated spatial gesture by the user directly to the virtual representation item VRI. In an alternative embodiment as illustrated in Fig. 3 the data transfer operation DTO or transfer of the data object from the memory of the physical source network device S-ND to the memory of the physical target network device T-ND can be performed in response to a physical movement M-U of the user himself toward the physical target network device T-ND. In the illustrated example of Fig. 3 the user U moves in the coordinate system of the user CSYS-U towards the target network device T-ND where he wants the data object DO to be memorized. After having reached physically (in the real world) the desired target network device T-ND the user U can trigger a data transfer operation DTO, for instance to copy the data object DO stored in the memory of the source network device S-ND into a memory of the target network device T-ND which he has reached after his movement. A copy DO' of the data object DO is then stored in the local memory of the target network device T-ND after the data transfer operation DTO has been finalized as illustrated in Fig. 3. If the data transfer operation DTO is a duplicating data transfer operation a copy of the data object DO is generated as illustrated in Fig. 3. In a possible embodiment an associated virtual representation item VRI' can be automatically generated for the copy of the data object DO'. This virtual representation item VRI' of the copied data object DO' can be displayed in a three-dimensional coordinate system of the physical target network device T-ND around that physical target network device T-ND on a display of the augmented reality network device AR-ND of the user or alternatively as a hologram in the vicinity of the physical network device T-ND.

In a possible embodiment of the method according to the first aspect of the present invention a relative position between the moved virtual representation item VRI' of the data object DO to be transferred to the physical target network device T-ND is continuously calculated and evaluated to determine whether the relative position between the moving virtual representation item VRI of the data object DO to be transferred and the physical target network device T-ND does fulfil a predefined data transfer condition to initiate a physical data transfer operation. If the data transfer condition is fulfilled the physical data transfer of the data object DO from the physical source network device S-ND to the physical target network device T-ND is automatically initiated. The physical data transfer of the data object from the physical source network device S-ND to the physical target network device T-ND can be performed via wireless data link or via a wired data link of the network. The transferred data object DO' can be stored in a memory of the physical target network device T-ND of the network.

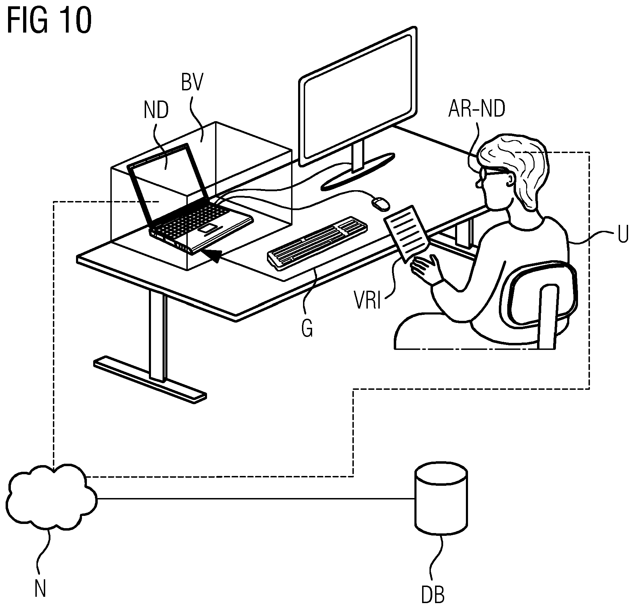

In a possible embodiment as illustrated in the schematic diagram of Fig. 4 each network device ND can comprise a surrounding three-dimensional boundary volume BV. The three-dimensional boundary volume BV can comprise different shapes or forms. In the illustrated exemplary embodiment of Fig. 4 the three-dimensional boundary volume BV around the target network device T-ND is a three-dimensional sphere. The shape of the three-dimensional boundary volume BV can be adapted to the three-dimensional shape of the respective network device ND. In a possible embodiment the form of the three-dimensional boundary volume BV around the physical target network device T-ND can encompass the housing of the respective network device. In other possible embodiments the boundary volume BV can also comprise a virtual bounding box as illustrated for instance in the schematic diagram of Fig. 10. In a possible implementation the three-dimensional boundary volumes BV of the different target network devices T-ND can be visible to the user U on the display of the augmented reality network device AR-ND. In an alternative implementation the three-dimensional boundary volumes BV are not visible. In a still further alternative implementation the user U can switch between different operation modes. In a first operation mode the three-dimensional boundary volumes BV are visible and in a second operation mode the three-dimensional boundary volumes BV are not visible or displayed.

As illustrated in the schematic diagram of Fig. 4 in a possible embodiment the data transfer condition is fulfilled if the current position of the moved virtual representation item VRI' of the data object DO to be transferred enters the three-dimensional boundary volume BV around the physical target network device T-ND. The current position of the moved virtual representation item VRI' is continuously tracked in a tracking system and it is checked whether the current position of the moved virtual representation item is within the three-dimensional boundary volume BV around a physical target network device T-ND as shown in Fig. 4. When the moved virtual representation item VRI' enters the three-dimensional boundary volume BV of a physical target network device T-ND the data transfer condition DTC is fulfilled and physical data transfer of the corresponding data object DO represented by the virtual representation item VRI to the target network device T-ND is performed via a data link as illustrated in Fig. 4. Accordingly, the user can in a possible exemplary embodiment select a virtual representation item VRI of a data object DO and move it with a spatial gesture in the three-dimensional space towards a target network device T-ND to perform data transfer operation DTO where the associated data object DO is copied or transferred from the memory of the source network device S-ND to the memory of the target network device T-ND. In a possible implementation the virtual representation item VRI of the data object DO may change its form or colour when entering the three-dimensional boundary volume BV of the physical target device T-ND and the user U can initiate the physical data transfer operation by a control command or spatial gesture. After the physical data transfer operation has been successfully accomplished the virtual representation item VRI of the transferred data object DO may change again its form or colour to signalize the successful end of the data transfer operation DTO. Moreover, if a data objectDO has been copied from a source network device S-ND to a target network device T-ND so that two instances of the data object DO exist a virtual representation item VRI1 of the original data object DO and a generated second virtual representation item VRI2 of the copied second data object instance can be visualized to the user in a possible implementation. In a still further possible implementation virtual representation item of the copied data object DO' can comprise a shape or form indicating that the associated data object DO' is not the original data object DO but a copy of original data object. In this embodiment the user immediately knows whether a data object DO represented by a virtual representation item VRI is an original version of the data object or a copied or a processed version of an original data object.

In a possible embodiment the three-dimensional boundary volume BV around a network device ND has a static size. In a further embodiment the three-dimensional boundary volume BV around a network device ND can change dynamically over time or can be reconfigured. For instance, the size of the three-dimensional boundary volume BV as illustrated in Fig. 4 can change over time during a day. The boundary volume BV may be of a bigger size during the day and may shrink at night. Further, the size of the boundary volume BV may change depending on environmental conditions. For instance, if the temperature around the target network device T-ND changes the three-dimensional boundary volume around the target network device may change its size or volume. In a still further implementation the shape of the boundary volume BV can also change dynamically over time and/or depending on environmental conditions. For instance, if a physical parameter in the surrounding of a network device ND changes the three-dimensional boundary volume BV around the corresponding network device may expand its form or shape towards one or several other network devices in its vicinity. For instance, by expanding the three-dimensional boundary volume BV the virtual representation items VRI anchored to other network devices NDs in the vicinity of the respective network device may enter the expanding three-dimensional boundary volume without being moved in response to a spatial gesture of a user. When the expanding three-dimensional boundary volume BV reaches a size where a virtual representation item is reached an associated data object DO can be copied in a physical process into the memory of the network device ND with the expanding three-dimensional boundary volume BV.

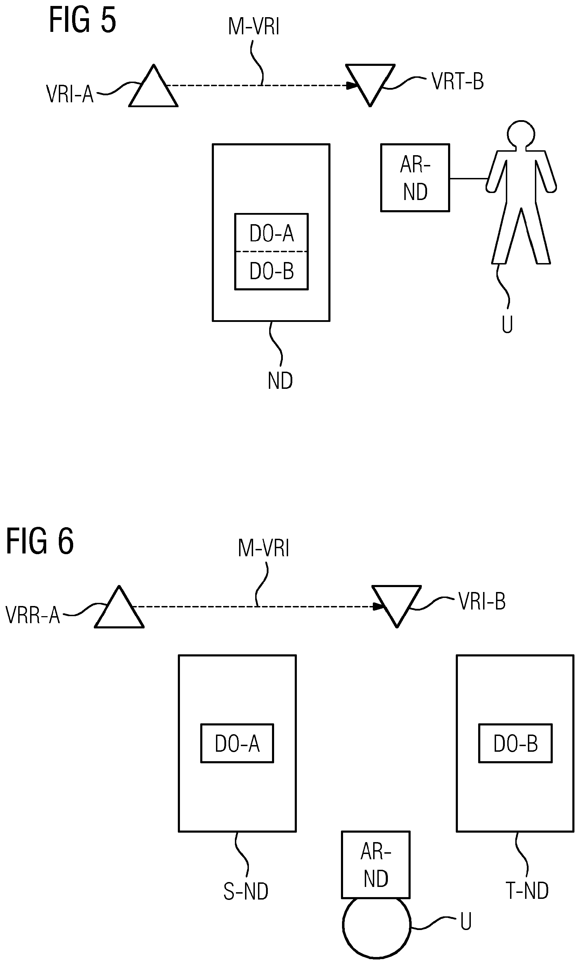

Fig. 5 shows a further schematic diagram for illustrating a further possible operation which can be performed by a method according to the first aspect of the present invention. In the illustrated example of Fig. 5 the virtual representation item VRI-A of a first data object DO-A is moved in response to a spatial gesture of the user U towards another virtual representation item VRI-B of another data object DO-B stored in the same memory within the network device ND. By moving the virtual representation item VRI-A of the first data object CO-A towards the virtual representation item VRI-B of the second data object DO-B in response to the first spatial gesture both data objects DO-A and DO-B can be selected for a data processing operation DPO on the two data objects DO-A, DO-B, e.g. a logic or arithmetical operation. By a second spatial gesture or input command the data processing operation DPO of the two selected data objects DO-A, DO-B can be initiated. The data processing operation DPO can comprise an arithmetic or logic processing operation performed automatically on the basis of data within one or more data objects such as data objects DO-A, DO-B represented by associated virtual representation items VRI-A, VRI-B selected in response to spatial gestures applied directly by the user U to the respective virtual representation items VRI-A, VRI-B.

Fig. 6 shows a further schematic diagram where the second data object DO-B is stored in a memory of another network device or target network device T-ND. By moving the virtual representation item VRI-A of the first data object DO-A towards the virtual representation item VRI-B of the second data object DO-B both data objects DO-A, DO-B may be selected for performing a data processing operation DPO for instance when the virtual representation item VRI-A enters a boundary volume BV of the target network device T-ND. By a further spatial gesture or input command the actual data processing operation DPO can by triggered by the user and the result of the operation can be stored as new data object either in the memory of the source network device S-ND or in the memory of the target network device T-ND. For the calculated or generated new data object DO-C a corresponding virtual representation item VRI-C can be generated automatically in a possible implementation and anchored in the vicinity of the network device where the resulting data object DO-C is stored. By selecting the virtual representation item VRI-C of the generated data object including the result of the data processing operation DPO the user may open up the data object DO-C to view the result of the data processing operation DPO.

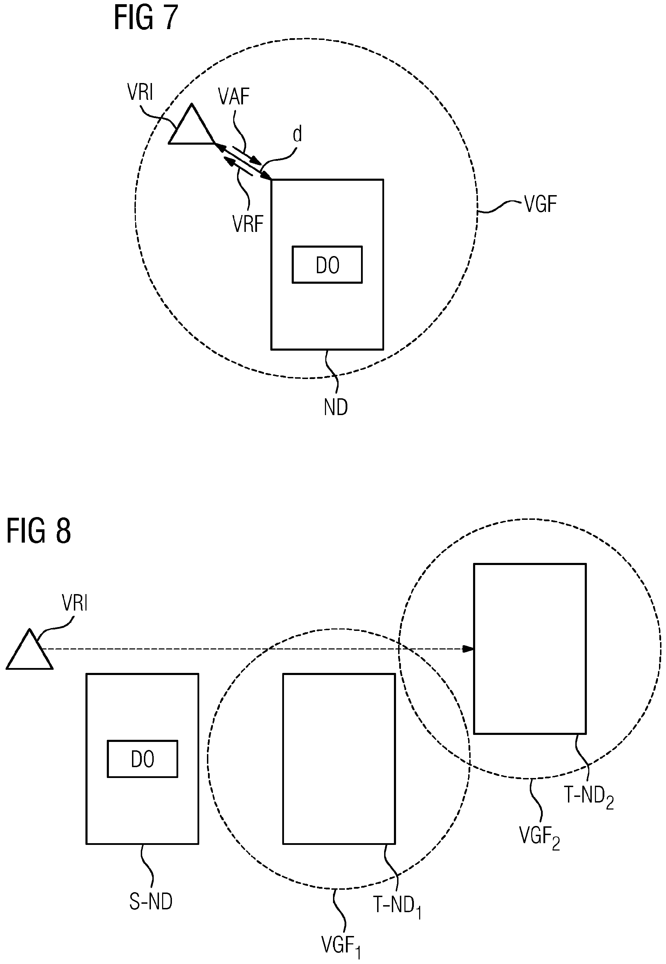

Fig. 7 shows a further schematic diagram of a possible exemplary embodiment of the present invention. In the illustrated embodiment a physical network device ND comprises in the three-dimensional coordinate system of the device a surrounding virtual gravitational field VGF which can apply a virtual attraction force VAF or a virtual repulsion force VRF on virtual representation items VRI in the vicinity of the respective physical network device ND. Similar to a satellite spinning around earth a virtual representation item VRI can be attracted by a virtual attraction force VAF in the three-dimensional space by the associated physical network device ND as shown in Fig. 7. The virtual representation item VRI can be static in a possible implementation or e.g. circulating around the network device ND where the associated data object DO is stored in a local memory. In a possible implementation the virtual attraction force VAF and/or virtual repulsion force VRF can depend on a calculated distance between the current position of the virtual representation item VRI and the location of the physical network device in the three-dimensional coordinate system. If the virtual representation item VRI is close to the physical network device ND the calculated virtual attraction force VAF is higher than in a situation when the virtual representation item VRI is located remote from the network device ND. The user can move the virtual representation item VRI attracted by a network device ND away from the network device ND by overcoming the virtual attraction force VAF with a corresponding spatial gesture. If the virtual representation item VRI is attracted by the network device ND with a high virtual attraction force VAF the user U has to accelerate the virtual representation item VRI with a higher acceleration than in a situation where the distance d between the virtual representation item VRI and the network device ND is high resulting in a low virtual attraction force VAF. Virtual representation items VRI can represent different kinds of data objects. Depending on the kind of the data object DO the virtual representation item VRI associated with the data object DO can either be attracted or repulsed by a network device ND of the network. For instance a network device ND comprising a huge memory space can attract virtual representation items VRIs of data objects DOs including a huge mount of data. In contrast a network device ND having only a small local memory will not attract virtual representation items VRI of data objects DO requiring a lot of memory space. In another example a network device ND having processing capabilities to process audio files will attract virtual representation items VRI of data objects DO including audio files and may not attract virtual representation items VRI of data objects DO including only image data files as data objects. In a further example a network device ND having free processing capabilities and resources will attract any virtual representation items VRI in its vicinity with a high virtual attraction force VAF whereas a network device ND having at the moment no processing resources or capabilities may not attract virtual representation items VRI of data objects DO and may even apply a virtual repulsion force VRF to the virtual representation items VRI. Consequently a user U moving virtual representation items VRIs in a network in an augmented reality space can intuitively get a feedback whether a specific target network device T-ND is fitting for the desired data processing operation DPO.

Fig. 8 shows a further schematic diagram for illustrating a possible implementation of the method according to the first aspect of the present invention. In the illustrated example a network comprises two network devices, i.e. a source network device S-ND and two different target network devices T-ND. Both target network devices T-ND₁ and T-ND₂ comprise a corresponding virtual gravitation field VGF as shown in Fig. 8. In the illustrated example the user may select in a first spatial gesture a virtual representation item VRI of the data object DO stored in the memory of the source network device S-ND and move it initially towards the first target network device T-ND₁. However, in the illustrated example the virtual gravitational field VGF₁ of the first target network device T-ND₁ applies a virtual repulsion force VRF to the approaching virtual representation item, for instance because the target network device T-NP₁ has not sufficient memory space for storing the transferred data object. In a possible implementation the virtual repulsion force VRF may also be physically feedback to the hand of the user U feeling the repulsion physically by means of a physical actuator. The user U can then move the virtual representation item VRI of the data object towards another target network device T-ND₂ having an associated virtual gravitational field VGF₂ as shown in Fig. 8. In the given example the second target network device T-ND₂ can comprise sufficient resources for storing and/or processing the data of the data object DO represented by the virtual representation item VRI and may apply a virtual attraction force VAF on the moved virtual representation item VRI. This virtual attraction force VAF can be transformed in a possible implementation by means of an actuator to a physical signal which can be detected or felt by the user U for instance using an actuator applying a physical force on the hand of the user U. In a possible implementation the virtual gravitational field VGF of different network devices can be visible to the user in the augmented reality space. This function can be activated in a specific operation mode of the system.

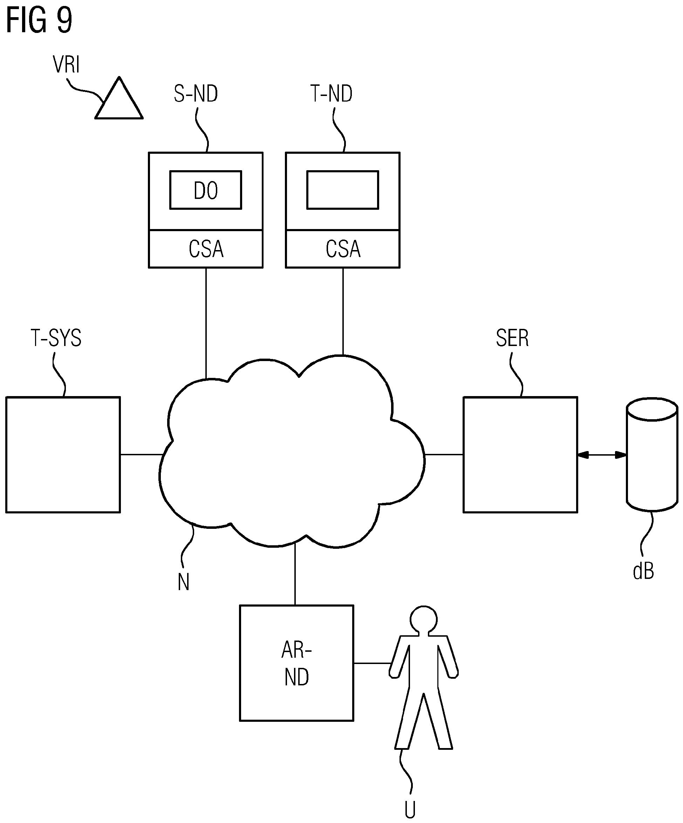

Fig. 9 shows a schematic diagram of a possible exemplary embodiment for a network according to the second aspect of the present invention. The network can comprise a plurality of different physical network devices ND. In the illustrated possible example of Fig. 9 the network comprises a source network device S-ND and a target network device T-ND, each comprising a local memory for storing data objects. The different network devices S-ND and T-ND may be connected via a client server application CSA to the network N as shown in Fig. 9. The network N can comprise a wired or wireless network. The augmented reality network device AR-ND of the user U is also connected to the network N as shown in Fig. 9. In a possible embodiment a server SER with an associated database DB can also be connected to the network N. In a still further embodiment a tracking system T-SYS can be connected to the network N as shown in Fig. 9. Each network device ND can comprise in a possible embodiment at least one memory or file storage, a network access as well as a client server application CSA providing an interface to the network N. The augmented reality network device AR-ND can comprise at least one file storage memory, a network access as well as a client server application CSA providing an interface. The augmented realty network device AR-ND further comprises client service handling display and may comprise a user input as well as a camera.

The tracking system T-SYS can comprise a tracking service running either locally on a device or running on an external hardware with external sensors. The server SER can run a server service application CSA providing an interface and may have access to the database DB containing data and entries of the different network devices NDs. These data entries of the network devices may comprise device IDs, network device positions or coordinates and/or network device addresses e.g. IP device addresses. As illustrated in the diagram of Fig. 9 the source network device S-ND has a memory for storing locally a data object DO represented by an associated virtual representation item VRI representing the data object.

The tracking system T-SYS can run externally or locally on a network device. The tracking system T-SYS informs the server SER about positional changes of the physical network devices ND. The tracking system T-SYS checks the positional changes and sends update information to the client server application CSA including the updated positions. The client server applications CSA can send update information to the server SER (update (ID, position (X, Y, Z), network address). Further, the server SER can update the entries in the associated database DB. In a possible embodiment the tracking system T-SYS may detect the position of the augmented reality network device AR-ND in a range of the source network device S-ND or the target network device T-ND. The tracking system T-SYS which may run locally on the augmented reality network device AR-ND may detect other network devices with vision-based algorithms at a position using a camera image generated by a camera of the augmented reality network device AR-ND. The tracking system T-SYS can then inform the service running on the server SER about the detected positions. For instance, the augmented reality network device AR-ND can send one or multiple requests to the server such as "get object at position (X, Y, Z)". The Server SER can then retrieve the necessary information from its database DB. The server SER can then send a reply to the augmented reality network device such as "object at position (X, Y, Z) is (ID, position, network address)".

In an alternative embodiment the tracking system T-SYS can run externally on an external hardware. In this embodiment the tracking system T-SYS may detect that the augmented reality network device AR-ND is close to a physical source network device S-ND or to the physical target network device T-ND. In this embodiment the tracking system T-SYS can send a request to the server SER such as "inform augmented reality network device about source network device S-ND and target network device T-ND". The server SER then retrieves the necessary information from its database DB and sends a list of (ID, position, network address) to the augmented reality network device AR-ND.

In a further step the augmented reality network device AR-ND can internally store in a local memory information about the network devices such as the ID, position, network address of the source network device S-ND and the target network device T-ND. The augmented reality network device can send requests both to the source network device S-ND and the target network device T-ND to get the three-dimensional boundary volume BV of both network devices ND and to get a list of files or data objects DO used in the desired data processing operation DPO.

In a further step both network devices S-ND, T-ND can answer the requests received from the augmented reality network device AR-ND by sending a list of three-dimensional boundary volumes or bounding boxes and the requested list of files or data objects DO.

In a further step the augmented reality network device AR-ND can store internally in the memory received list of bounding boxes or boundary volumes BV and the received list of data objects DO or files of each network device S-ND, T-ND.

In a further step the augmented reality network device AR-ND can display virtual representation items VRI of the data objects DO to the user U via a display of the augmented reality network device AR-ND.

In a further step the user U can interact by using an input interface of the augmented reality network device AR-ND. This input interface can interpret in a possible embodiment spatial gestures of the user U and send corresponding commands to the service to the client service application CSA of the server.

In a possible embodiment the user may first open a file or data object DO on a source network device S-ND by using a first gesture such as a click on the virtual representation item VRI of the respective data object DO. The augmented reality network device AR-ND then sends a request message to the source network device S-ND such as: "get data object ID". The source network device S-ND responds by sending the data object DO to the augmented reality network device AR-ND. The augmented reality network device AR-ND can then store the received file or data object DO in a local memory of the augmented reality network device. Further, the augmented reality network device AR-ND can display the content of the data object DO to the user U such as an image, text or audio.

The user U can further copy a data object DO from source network device S-Nd to the target network device T-ND (and vice versa) by using predefined gestures in particular spatial gestures such as drag and drop gestures on the virtual representation item VRI of the data object.

In a possible implementation the augmented reality network device AR-Nd can internally check if a position of the virtual representation item VRI does match the position either of a source network device S-ND or target network device T-ND. Then the augmented reality network device AR-ND can send a request message to the source network device S-ND such as: "copy data object ID to URL:\\target network device/storage". The source network device S-ND can then contact the target network device T-ND. The source network device S-ND sends the data object DO in a physical data transfer operation DTO to the target network device T-ND of the network N via a data link. The source network device S-ND may also send a transmission progress information to the augmented reality network device AR-ND. The augmented reality network device AR-ND can display the received progress information to the user U via its display. The target network device T-ND can store the received data object DO or file in its local file storage or memory. The target network device T-ND can send an updated list of data objects to the augmented reality network device AR-ND. The augmented reality network device AR-ND can then display virtual representation items VRI of an update file list or data object list to the user U via its display.

The user U can also delete a file or data object DO stored in a memory of a network device ND by using gestures. By performing a data object deletion gesture detected by the augmented reality network device AR-ND a request to the network device ND is sent such as "delete data object ID". Then the selected network device ND deletes the data objects DO from its local file storage and may inform the augmented reality network device AR-ND about the deletion progress. The network device ND can then send an updated file list or data object list to the augmented reality network device AR-ND. The augmented reality network device AR-ND displays the updated file list or data object list to the user U via its display. There can be a huge variety of different data processing operations DPOs such as data transfer operations, data object deletion operations, data file opening operations, data file transformation or conversion operations, data file distribution operations or data file update operations. The operations can include arithmetic or logic operations. The network illustrated in Fig. 9 can comprise a wired or wireless network including a plurality of different network nodes or network devices such as machines or computation devices. The network devices ND can be mobile or fixed network devices. In the embodiment illustrated in Fig. 9 the virtual representation item VRI is displayed on a display of the augmented reality network device AR-ND of the user U. In an alternative embodiment the virtual representation item VRI can also be displayed as a hologram close to the physical network device ND requiring no display.

Fig. 10 shows schematically a possible use case of the method according to the present invention. In the illustrated use case a user U can perform a data transfer of a data object DO represented by a virtual representation item VRI to a physical network device ND of a network. In the illustrated embodiment the physical network device ND is a laptop placed on the table surrounded in the illustrated implementation by a virtual bounding box or boundary volume BV. In the illustrated example the virtual representation item VRI is a complex item representing data object DO which may contain text and/or images. The virtual representation item VRI is visible to the user U wearing an augmented reality network device AR-ND connected to the network N. The user U wears in the illustrated example a mixed reality headset including a hololens. In the illustrated use case the user U can perform with his arm and hand a drag and drop spatial gesture G moving the virtual representation item VRI representing an associated data object DO or file into the three-dimensional boundary volume BV around the laptop ND. As illustrated in this specific example the boundary volume BV is formed by a virtual boundary box or cube around the physical network device or laptop ND. The three-dimensional boundary volume BV is in a preferred embodiment visible to the user wearing the augmented reality network device AR-ND. When the virtual representation item VRI of the data object DO enters the boundary volume BV a data transfer condition is fulfilled and the data object DO is automatically transferred to a memory of the physical network device or laptop ND. For instance the data object DO can be stored in a database of the network system. This database can be a remote database connected to the network N. Further, the data object DO can also be stored in memory space of a network cloud. In this embodiment the data processing operation DPO is a data transfer operation DTO transferring a data object DO from a physical source network device formed by a memory or storage of a cloud network system N. In a possible embodiment the virtual representation item VRI seen by the user U using the augmented reality network device AR-ND can comprise information data visible to the user U and relating to the corresponding associated data object DO. For instance in a possible implementation the virtual representation item VRI displayed to the user U on the display of his augmented reality network device AR-ND can indicate a name or other ID of the respective data object DO. After having identified the data object DO by means of its virtual representation item VRI the user U can decide whether he wants to store the corresponding data object DO on his laptop ND or not. When he decides to store or copy the data object DO on his laptop ND he can perform the drag and drop spatial gesture G as illustrated in Fig. 10 by moving his hand into the boundary volume BV surrounding the physical network device or laptop ND. In an alternative embodiment as also illustrated in Fig. 3 the user U may also walk towards his laptop ND to trigger the data transfer into the memory of the laptop ND. For instance a user U may walk into the boundary volume BV of the physical network device ND to trigger the data transfer of the data object DO represented by the virtual representation item VRI into the memory or storage of the target network device T-ND formed by the laptop.

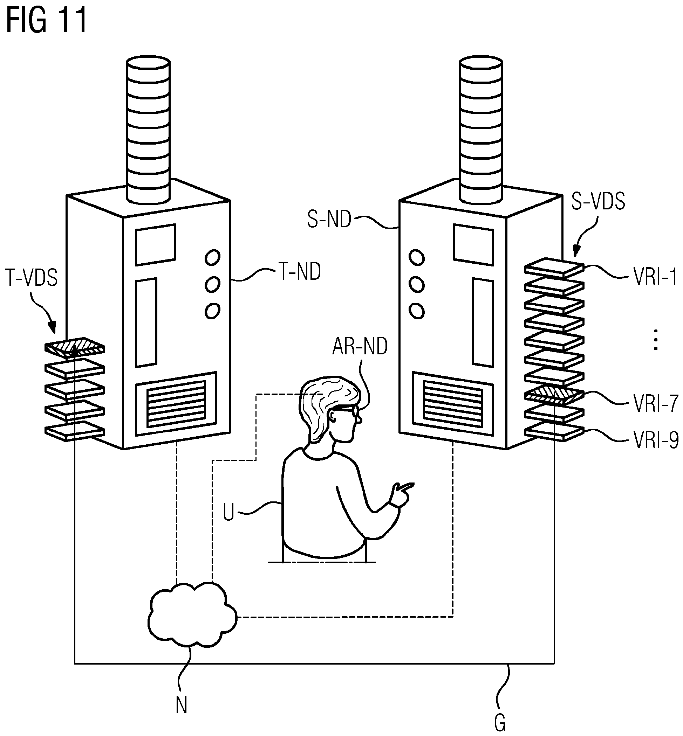

Fig. 11 shows a further schematic diagram of a possible use case. In the illustrated example the user U wishes to transfer data from a source network device S-ND to a target network device T-ND. In the illustrated specific example the source network device S-ND and the target network device T-ND comprise machines of a production facility. In the illustrated embodiment a virtual data stack S-VDS is displayed to the user U comprising several virtual representation items of different data objects to the user. As illustrated in the specific example nine different virtual representation items VRI-1 to VRI-9 are stored in a local memory of the source network device S-ND or machine and displayed to the user. Further, another virtual data stack T-VDS comprising four different virtual representation items VRI of four different data objects is stored in the local memory of the target network device T-ND S-ND and displayed to the user. The user U can select any virtual representation item VRI from the displayed virtual data stack S-VDS representing data objects DO stored in the local memory of the source network device S-ND and can transfer the corresponding data object DO automatically into the memory of the target network device T-ND using a drag and drop spatial gesture G as illustrated in Fig. 11. In the illustrated example the user drags the virtual representation item VRI-7 from S-VDS to T-VDS In a further implementation a first kind of spatial gesture is used for a duplicating data transfer and another spatial gesture is used for a non-duplication data transfer operation DTO. In a non-duplicating transfer operation the virtual representation item VRI is deleted from the virtual data stack S-VDS of the source network device S-ND and placed into the virtual data stack T-VDS of the target network device T-ND. In the duplicating data transfer operation an additional virtual representation item VRI is generated for the duplicated data object and displayed to the user. Form, shape or colour of the virtual representation item VRI can indicate whether the corresponding data object DO is an original data object or a copied or duplicated data object.

As can be seen from Fig. 10, 11 each network device ND comprises a virtual boundary volume BV or sphere around the corresponding network device ND in space. The three-dimensional boundary volume represents a sphere of influence of the respective network device ND. Further, each network device ND can comprise a corresponding coordinate position X, Y, Z in space. These three-dimensional coordinates can be used as a key to find for example a network address of the respective network device ND. The unique network address can be mapped to one or several positions in the three-dimensional space. The network address can be found by using the position coordinates X, Y, Z of the respective network device ND. The network address can be for instance be an IP address within the address space of network N.

A service can be run on each network device ND that provides an interface to receive and send data streams and commands. This service can comprise security measures relating to the user management and rights management. Furthermore, input and output operations can be managed while awaiting a data processing operation. For instance, once a data object or file is transferred it can be displayed (depending on the sender's rights) in a local folder or directly on a screen. Further, a three-dimensional virtual representation item VRI can be displayed anchored next to the corresponding network device ND. In a possible implementation a drawer of files which can symbolize a data content of the network device ND in three-dimensional space can be displayed to the user. The user may grab files, open files, remove files, copy files and/or drag and drop files from one network device to another network device.

In a possible embodiment the mapping of three-dimensional coordinates and network addresses is performed by the system (e.g. a distribute node-based system similar to DNS).

The augmented reality network device AR-ND of the user U can comprise a mixed realty glasses like Microsoft HoloLens. The user U can see the virtual representation items VRI directly in his field of view. By using a smartphone or other devices comprising a camera the user U may see the camera view overlaid with virtual objects. It is also possible to use other sensors such as accelerometers, gyroscopes to determine the position and/or orientation of a physical network device. By means of spatial gestures the user U can aim at a target network device T-ND and transfer data using for instance a swipe spatial gesture. The mapping of a 3D coordinate and a network address of a network device ND can be done initially by the user in a setup dialogue. Data can be automatically updated for network devices that change their position in space. Further, object recognition and tracking can be used to update data of moving network devices.

In a possible embodiment the user U can also configure the three-dimensional representation of a device, in particular the virtual representation item VRI of a network device. For instance, the user can define the location of a keyboard, screen, computer and the visual display of data. This information can be stored in the system. In this way the user can transfer data by aiming at a computer monitor, mouse or keyboard.

The data object or file is represented by three-dimensional virtual representation item VRI. The symbolism or icons of the three-dimensional virtual representation item VRI can reach from symbol abstract primitives to real world metaphors like folders, film reels etc. In a further embodiment a data format and data size of a data object DO can also be visualized to the user. In a further embodiment data associated with the data object DO can be included into the virtual representation item VRI and can be displayed as anchored to the physical network device in the three-dimensional space.

The user can manipulate the position and orientation of a data object DO in the virtual space using spatial gestures. Once a three-dimensional virtual representation object is dragged and dropped into a bounding box BV of a physical network device ND a corresponding network address can be retrieved and the physical file transfer can be initiated. This data transfer can also be visualized in the three-dimensional space between the source network device S-ND and the target network device T-ND. It is possible to transfer data directly between two external network devices by the user. In a possible embodiment an online status of a network device ND can be displayed in the three-dimensional space to the user e.g. by a colour coding of its boundary volume BV. For instance, it can be displayed that the physical network device ND at the moment transmits data or receives data. In the system according to the present invention it is possible that multiple users can interactively set up and collaboratively use the system. Accordingly, several users U each having an augmented reality network device AR-ND may interact with each other by moving virtual representation items VRI in the three-dimensional space.

In a possible implementation each augmented reality network device AR-ND does also comprise an associated boundary volume BV. A first user can push the virtual representation item of a data object DO into the boundary volume BV of an augmented reality network device AR-ND on another user to change the responsibility for the respective data object DO. After the responsibility for the data object DO has switched from the first user to the receiving second user the second user can place the virtual representation item VRI into the boundary volume around BV a physical network device ND of his choice storing the corresponding data object DO in the local memory of the selected target network device T-ND chosen by the second user.

There are many different use cases where the invention according to the present invention can be implemented. For instance, a worker in front of a machine performs a maintenance activity. The worker or user U wants to transfer data from the machine forming a source network device S-ND to his mobile device forming a target network device T-ND. He may use a drag and drop spatial gesture to pull a virtual representation item VRI representing the requested data from the machine and drop it onto his mobile device. Further, the user may create a three-dimensional model in a VR/AR application and may want to print it on a 3D printer. In this use case the user can drag and drop the created three-dimensional model directly on the 3D printer which prints a device according to the model.

In a further use case a user U may walk through his office and may want to send a document to one of his colleagues. He may look at the colleague's computer, drags the document or document object into the boundary volume BV of the computer of his colleague.

In a further use case a user U may be in a room and can drag data from a first computer (source network device) directly to another computer (target network device) without using any connected input devices such as keyboard or mouse.

In a further use case a user being an IT technician may want to immediately see the data flows between connected network devices. The current data flows can be visualized on the display of his augmented reality network device AR-ND.

Further a user being an IT administrator may want to distribute data packages to different network devices positioned in the same room using a spatial distribution gesture applied to the virtual representation items VRI. For instance a user like an administrator may want to perform a software update of all network devices within a room. He can select the virtual representation item VRI representing the software data object used for the software update and may perform a spatial distribution gesture so that a data transfer or a software update is performed automatically for all target network devices T-ND within the room.

In a further use case a remotely connected user can be represented as a 3D avatar and can interact with network devices within a room.

Further in a smart room a user may want to manipulate data of different network devices ND such as a thermostat using his augmented reality network device AR-ND and applying predefined spatial gestures.

As it becomes evident from the above examples the method and system according to the present invention can be applied to a huge variety of different use cases. The method and system according to the present invention makes it much easier for a user U to perform data processing operations DPO. Further, the probability of errors within the system is significantly reduced. Further, many peripheral devices such as keyboards, mouse devices and any other kind of input devices can be become obsolete when using the method according to the present invention. For instance, in a system where all physical network devices are connected to the network it is possible to dispense with many input devices if the user wear augmented reality network devices for performing the necessary data processing operations DPO. A further advantage is that the data transfer is visualized spatially and in real time to the user.

In a possible preferred embodiment each network device ND of the network N comprises an associated boundary volume BV which allows to monitor whether a data transfer condition DTC is fulfilled. In a further alternative embodiment also groups of different network device can have a common boundary volume. For instance, if a virtual representation item VRI of a data object is pushed into a boundary volume BV of a group of network devices the associated data object DO is copied or transferred to all network devices ND forming part of the respective group. In a possible embodiment boundary volumes BV can be set up in a configuration phase of the system. A huge variety of different spatial gestures can be associated to different data processing operations DPO. The spatial gestures can comprise touching, grabbing, dragging, but even throwing of virtual representation items. For instance, by throwing a virtual representation item with a high acceleration of force the user can influence the speed of the data transmission or data object transfer.

## Claims

1. A method for performing a data processing operation (DPO) on at least one data object (DO) stored in a memory of a physical network (ND) device of a network in response to one or more associated spatial gestures (SG) of a user (U) applied directly to a three-dimensional virtual representation item (VRI) of the respective data object representing said data object (DO) and displayed in a three-dimensional coordinate system (CSYS-ND) of said physical network device (ND) around said physical network device on a display of an augmented reality network device (AR-ND) of the user (U) or displayed as a hologram (H) around said physical network device (ND) .

2. The method according to claim 1
wherein the data processing operation (DPO) comprises a duplicating or not duplicating data transfer operation (DTO) of the data object (DO) from a physical source network device (S-ND) to a physical target network device (T-ND) of a network.

3. The method according to claim 2,
wherein for performing a data transfer operation (DTO) to transfer the data object (DO) from a memory of a physical source network device (S-ND) to a memory of a physical target network device (T-ND), the three-dimensional virtual representation item (VRI) of the data object (DO) stored in the memory of the physical source network device (S-ND) being displayed in the three-dimensional coordinate system (CSYS-ND) around said physical source network device is selected in response to a first spatial gesture ,SG1, of the user (U), triggering a transformation of the three-dimensional coordinates of the selected three-dimensional virtual representation item (VRI) of the data object (DO) to be transferred into three-dimensional user related coordinates of a user coordinate system (CSYS-U) of the user,
wherein the selected three-dimensional representation item (VRI) of the data object (DO) is then moved (M-VRI) within the user coordinate system (CSYS-U) towards the physical target network device (T-ND) in response to a second spatial gesture (SG2) of the user applied directly to the three-dimensional representation item (VRI) of the data object (DO) to be transferred or in response to a physical movement (M-U) of the user (U) itself towards the physical target network device (T-ND).

4. The method according to claim 3,
wherein a relative position between the moved virtual representation item (VRI) of the data object (DO) to be transferred and the physical target network device (T-ND) is continuously calculated and evaluated to determine whether the relative position between the moving virtual representation item (VRI) of the data object (DO) to be transferred and the physical target network (T-ND) device does fulfil a predefined data transfer condition, DTC, to initiate a physical data transfer operation.

5. The method according to claim 4,
wherein if the data transfer condition, DTC, is fulfilled a physical data transfer of the data object (DO) from the physical source network device (S-ND) to the physical target network device (T-ND) via a wireless link or a wired link of the network is automatically initiated and the transferred data object (DO) is stored in the memory of the physical target network device (T-ND) of the network.

6. The method according to claim 5,
wherein the data transfer condition, DTC, is fulfilled if the current position of the moved virtual representation item (VRI) of the data object (DO) to be transferred is within a three-dimensional boundary volume (BV) around said physical target network device (T-ND).

7. The method according to any of the preceding claims 1 to 6,
wherein the data object (DO) comprises a data file including a program file, a text file, an image file and/or an audio file.

8. The method according to claim 7,
wherein the data processing operation, DPO, comprises a data file transfer operation, a data file deletion operation, a data file opening operation, a data file transformation or conversion operation, a data file distribution operation, and/or a data file update operation.

9. The method according to any of the preceding claims 1 to 8,
wherein the virtual representation item (VRI) of the data object (DO) stored in the memory of the physical network device (ND) is anchored to the respective physical network device (ND) in the three-dimensional coordinate system (CSYS-ND) of the respective physical network device (ND).

10. The method according to any of the preceding claims 1 to 9,
wherein the physical network device (ND) comprises a unique spatial network address used for performing the data processing operation (DPO) on the data object (DO) stored in the memory of the respective physical network device (ND) in response to the spatial gesture, SG, applied by the user (U) to the three-dimensional virtual representation item (VRI) of the data object.

11. The method according to any of the preceding claims 1 to 10,
wherein the spatial gesture, SG, applied directly to the virtual representation item (VRI) provides a direction, a velocity and/or an acceleration of the virtual representation item (VRI) moved in the three-dimensional coordinate system (CSYS-ND) from the physical source network device (S-ND) towards one or more physical target network devices (T-ND) and/or moved towards other virtual representation items (VRI) of other data objects (DO).

12. The method according to claim 11,
wherein the other virtual representation items (VRI) represent data objects (DO) stored in a memory of the physical source network device (S-ND) or in memories of other physical target network devices (T-ND) of the network.

13. The method according to any of the preceding claims 1 to 12,
wherein the data processing operation, DPO, comprises an arithmetic and/or logic processing operation performed automatically on the basis of data within one or more data objects (DO) represented by associated virtual representation items (VRI) and selected in response to spatial gestures, SG, applied directly by a user (U) to the respective virtual representation items (VRI).

14. The method according to any of the preceding claims 1 to 13,
wherein the physical network device (ND) comprises in the three-dimensional coordinate system, where virtual representation items (VRI) of data objects (DO) can be moved by a user, a surrounding virtual gravitational field (VGF) which applies a virtual attraction force (VAF) or virtual repulsion force (VRF) on the virtual representation items (VRI) in the vicinity of the respective physical network device (ND).

15. The method according to claim 14,
wherein the virtual attraction and/or repulsion force (VAF, VRF) depends on a calculated distance (d) between the current position of the virtual representation item (VRI) and the location of the physical network device (ND) in the three-dimensional coordinate system.

16. The method according to any of the preceding claims 1 to 15,
wherein the physical network device (ND) comprises an internet of things network device of a wired or wireless network.

17. A network comprising a plurality of physical network devices,
wherein a data processing operation (DTO) on at least one data object (DO) stored in a memory of a physical network device (ND) is performed in response to one or more detected spatial gestures, SG, applied directly by a user (U) to a virtual representation item (VRI) representing the data object (DO), wherein the virtual representation item (VRI) is displayed in a three-dimensional coordinate system (CSYS-ND) around said physical network device on a display of an augmented reality network device (AR-ND) worn by the user (U) or is displayed as a hologram around said physical network device (ND).
